# EUROPÄISCHE PATENTSCHRIFT

(11) **EP 3 025 955 B1**
(45) Veröffentlichungstag und Bekanntmachung des Hinweises auf die Patenterteilung: **19.06.2019**
(21) Anmeldenummer: 14003978.5
(22) Anmeldetag: 26.11.2014
(51) Int. Cl.: B64C 9/16, F16C 29/02, F16C 33/02, F16C 33/26

(54) **Hochauftriebssystem**
High lift system
Système d'hypersustentation

(43) Veröffentlichungstag der Anmeldung: 01.06.2016
(73) Patentinhaber: Airbus Defence and Space GmbH, 85521 Ottobrunn (DE)
(72) Erfinder: Havar, Tamas, 83052 Bruckmühl (DE); Meyer, Meinhard, 81739 München (DE); Fietzek, Heiko, 83233 Bernau (DE)
(74) Vertreter: Isarpatent

(56) Entgegenhaltungen:
- EP-A2- 0 571 357
- EP-A2- 2 284 077
- WO-A1-2005/077756
- CA-A1- 2 353 280
- US-A- 3 515 444

## Beschreibung

Die Erfindung betrifft ein Hochauftriebssystem für ein Flugzeug.
Eine Hochauftriebshilfe ist eine Vorrichtung an einer Tragfläche eines Flugzeuges, die dazu dient, in bestimmten Flugsituationen den Auftriebsbeiwert der Tragflächen zu vergrößern, wodurch das Flugzeug bereits bei geringeren Geschwindigkeiten flugfähig ist. Zudem bewirkt sie eine in der Lande- und Startphase benötigte Erhöhung des Luftwiderstands.

Hochauftriebssysteme umfassen am Tragflügel des Flugzeugs angeordnete Hochauftriebsklappen, welche durch einen Stellantrieb zwischen einer eingefahrenen Stellung und mehreren ausgefahrenen Stellungen verstellbar sind. Bei einem Ausfahren der Klappe findet sowohl eine Verlagerung der Klappe gegenüber dem Flügel nach hinten und damit eine Verlängerung des wirksamen Flügelprofils als auch eine Erhöhung des Anstellwinkels der Klappe mit Vergrößerung der Profilwölbung und damit einhergehender Erhöhung des aerodynamischen Auftriebs statt. Durch den sich zwischen Klappe und Flügel bei der Ausfahrbewegung bildenden Spalt strömt unter hoher Geschwindigkeit Luft von der Unterseite des Flügels zur Oberseite der Klappe, was einen weiteren Beitrag zur Auftriebserhöhung leistet.

Eines der am weitesten verbreiteten Arten von Hochauftriebssystemen ist die sogenannte Fowler-Klappe. Bei dieser erfolgt während des Ausfahrens der Klappe eine Bewegung dieser nach hinten weg vom Flügel, wobei sich der oben erwähnte Spalt bildet. Diese Bewegung ist insbesondere bei einem zunehmenden Ausfahren der Klappe eine Vergrößerung des Anstellwinkels der Klappe überlagert.

Ein Mechanismus zur Betätigung einer Fowler-Klappe enthält gewöhnlich an der Unterseite des Flügels eine sich vom Flügel schräg nach hinten abwärts erstreckende Schiene (Track), auf der ein Schlitten (Carriage) verschiebbar gelagert ist. Über ein Gelenk ist der Schlitten mit der Klappe gekoppelt.

Die Lagerung des Schlittens auf der Schiene erfolgt herkömmlich über Wälzlager- oder Tonnenlagerrollen. Diese müssen im Betrieb häufig geschmiert werden und benötigen einen großen Bauraum. Während des Einsatzes kann es zum Blockieren der Rollen kommen, was stellenweise zu Abplattungen auf den Rollen führen kann. Dadurch können auch die Schienen beschädigt werden, was wiederum aufwändige Reparaturen erfordert.

Die WO 2005/077756 A1 beschreibt ein Hochauftriebssystem für ein Flugzeug mit einer Landeklappe, welche an einem in einer Führungsschiene gleitend gelagerten Schlitten gekoppelt ist. In der Führungsschiene sind zwei einander zugewandte, sich in der Längsrichtung der Führungsschiene erstreckende, U-förmige Führungsbahnen ausgebildet. An dem Schlitten ist seitlich jeweils ein in der Führungsbahn gelagerter Gleitstein angeordnet.

In der EP 2 284 077 A2 wird eine Führungseinrichtung zum Führen einer Klappe eines Flugzeugflügels beschrieben. Diese Führungseinrichtung weist eine längliche gekrümmt verlaufende Führungsschiene mit I-förmigem Querschnitt auf, welcher eine Führungsbahn zur Führung eines Schlittens definiert. Der Schlitten ist zur Kopplung an die Klappe vorgesehen und weist ein U-förmiges Trägerteil auf, das Trägerteil auf die Führungsschiene aufgesetzt ist, wobei an dem Trägerteil angeordnete Gleitsteine in der Führungsbahn der Führungsschiene geführt sind.

Aufgabe der vorliegenden Erfindung ist, ein verbessertes Hochauftriebssystem zu schaffen.

Diese Aufgabe wird mit einem Hochauftriebssystem mit den Merkmalen des Anspruchs 1 gelöst.

Vorteilhafte Ausführungsformen und Weiterbildungen sind in den Unteransprüchen gekennzeichnet.

Ein Hochauftriebssystem gemäß der Erfindung besitzt eine am Tragflügel des Flugzeugs angeordnete Hochauftriebsklappe. Diese ist an einem mit dem Flügel gekoppelten Schlitten gelagert, wobei der Schlitten mittels einer Hochauftriebslagerung auf einer Schiene verschiebbar gelagert ist. Erfindungsgemäß weist die Hochauftriebslagerung ein Gleitlager auf.

Das Hochauftriebssystem gemäß der Erfindung hat den Vorteil, dass die Hochauftriebslagerung geringe Bauhöhen des Schlittens ermöglicht. Dies ist insbesondere durch den Einsatz von Gleitsteinen geringer Bauhöhe möglich. Des Weiteren ist das Gleitlager verschleißarm, so dass es dieselbe Lebensdauer wie die des Flugzeuges selbst besitzen kann.

Erfindungsgemäß sind die Gleitsteine trapezförmig ausgebildet, wobei die trapezförmigen Gleitsteine eine der Schiene zugewandte trapezförmige Kontaktfläche aufweisen, wobei ein Winkel der Kontaktfläche, der sich zwischen einer sich in der Bewegungsrichtung erstreckenden Längskante der Kontaktfläche und Seitenkanten der Kontaktfläche ergibt, spitz ist, also weniger als 90° beträgt. Dadurch wird eventuell auf der Schiene vorhandener Schmutz bei einer Bewegung des Schlittens auf der Schiene von dieser automatisch entfernt. Somit liegt ein selbstreinigendes Hochauftriebssystem vor.

Bevorzugt weist das Gleitlager zumindest einen Gleitstein auf, der als Material einen Werkstoff mit einem geringen Reibungskoeffizienten enthält. Besonders bevorzugt ist der zumindest eine Gleitstein aus einem Werkstoff mit einem geringen Reibungskoeffizienten aufgebaut oder besteht aus diesen.

Bevorzugt weisen alle Gleitsteine des Gleitlagers einen Werkstoff mit einem geringen Reibungskoeffizienten auf oder bestehen aus diesem.

Nach einer Variante der Erfindung weisen die Gleitsteine einen Trägerkörper auf, der mit dem Werkstoff als Gleitschicht auf einer der Schiene zugewandten Kontaktfläche versehen ist. Dies spart vorteilhaft Materialkosten, denn nur die Gleitschicht selbst muss aus einem Werkstoff mit einem geringen Reibungskoeffizienten bestehen.

Der Werkstoff kann auf der Kontaktfläche etwa als Belag, Schicht, Beschichtung oder Buchse aufgebracht sein.

Als Werkstoff mit geringem Reibungskoeffizienten kommt bevorzugt Teflon, faserverstärktes Teflon, Graphit, Bleilegierung, Zinnlegierung und Sintermetall mit in den Poren eingelagertem Schmierstoff in Frage.

Nach einer Variante der Erfindung ist das Gleitlager wartungsfrei. Dies ermöglicht einen Betrieb der Hochauftriebslagerung und somit des Hochauftriebssystems, ohne dass ein Schmieren der Hochauftriebslagerung notwendig wäre. Dies bedeutet einen geringen Wartungsaufwand für die Hochauftriebslagerung und damit für das Hochauftriebssystem.

Wird gemäß einer Ausführungsform ein wartungsarmes Gleitlager eingesetzt, besitzt dieses gute Notlaufeigenschaften.

Ein Gleitstein kann nach einer Variante ein Abriebdetektionssystem aufweisen. Dieses zeigt an, wenn der Gleitstein um eine vorgegebene Dicke verschlissen ist.

Nach einer Variante weist das Abriebdetektionssystem einen Graphitbereich auf, der nach einem Abrieb des Gleitsteins um eine vorgegebene Dicke freisetzbar ist. Dann wird im Betrieb die Schiene durch den Abrieb des Graphits schwarz eingefärbt. Dies dient als optische Anzeige des Verschleißes des Gleitsteins. Außerdem schmiert das abgeriebene Graphit aus dem Graphitbereich zusätzlich den Gleitstein gegenüber der Schiene, was die Notlaufeigenschaften weiter verbessert.

Ist auf einem Trägerkörper des Gleitsteins eine Gleitschicht aufgebracht, stellt diese vorteilhaft die Schicht dar, nach deren Verschleiß der Graphitbereich, wie etwa ein Graphitstift, freigesetzt werden kann.

Nach einer Variante der Erfindung weisen die Gleitsteine Schmutzabweiser auf, die derart angeordnet und ausgebildet sind, dass Verschmutzungen auf der Schiene im Betrieb abgestreift werden. Dadurch lassen sich die Gleitsteine schonen und eine noch effektivere Reinigung der Schiene erzielen.

Der Schmutzabweiser kann beispielsweise eine Bürste oder ein Gummielement enthalten bzw. aus diesen bestehen.

Es kann vorteilhaft sein, dass der Schmutzabweiser trapezförmig ausgebildet ist, wobei ein Winkel auf der der Schiene zugewandten Seite spitz ist. Dies hat im Betrieb den oben für den Gleitstein selbst beschriebenen Effekt.

Weitere Ausführungsformen und Vorteile der Erfindung werden im Folgenden an einem bevorzugten Ausführungsbeispiel anhand schematischer Darstellungen näher erläutert. Dabei zeigen
- Figur 1: eine perspektivische Ansicht eines Schlittens gemäß der Erfindung,
- Figur 2: einen Ausschnitt einer Seitenansicht des Schlittens von Fig. 1,
- Figur 3: eine Unteransicht des Schlittens,
- Figur 4: einen Ausschnitt aus einer Schnittansicht des Schlittens,
- Figur 5: eine perspektivische Ansicht einer Haltestruktur mit einem Gleitstein und
- Figur 6: eine perspektivische Ansicht einer Haltestruktur mit einem Gleitstein gemäß einer Variante des Ausführungsbeispiels.

In den Figuren tragen gleiche konstruktive Elemente die gleichen Bezugsziffern.

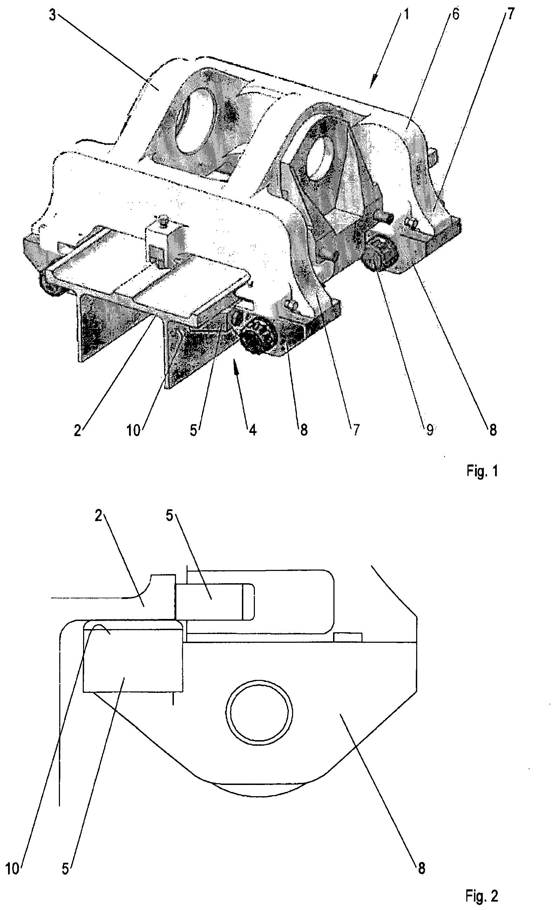

Eine Fowler-Klappe (nicht gezeigt) ist mittels eines Schlittens 1 auf einer Schiene 2 verschiebbar gelagert. Die Schiene 2 verläuft an der Unterseite eines Tragflügels eines Flugzeugs schräg nach hinten abwärts. Der Schlitten 1 ist über ein Gelenk 3 mit einem Drehpunkt im vorderen Bereich der Klappe gekoppelt. Gemäß einer sogenannten Track Rear Link Kinematik findet bei einem Ausfahren der Klappe sowohl eine Verlagerung der Klappe gegenüber dem Flügel nach hinten und damit eine Verlängerung des wirksamen Flügelprofils als auch eine Erhöhung des Anstellwinkels der Klappe mit Vergrößerung der Profilwölbung und damit einhergehender Erhöhung des aerodynamischen Auftriebs statt. Der Schlitten 1 ist erfindungsgemäß mittels eines Gleitlagers 4 auf der Schiene 2 gelagert. Das Gleitlager 4 enthält Gleitsteine 5 aus Sintermetall, in dessen Poren Fett als Schmierstoff eingelagert ist. Dadurch ist das Gleitlager 4 wartungsfrei. Die Schiene 2 wird im Betrieb nicht geschädigt, und somit ist das gesamte Hochauftriebssystem mit geringerem Aufwand zu warten als herkömmliche Hochauftriebssyteme mit Wälzlager oder Tonnenlager. In dem Ausführungsbeispiel sind acht Gleitsteine 5 vorgesehen, die an einem Gleitschuh 6 angeordnet sind. Der Gleitschuh 6 weist vier Enden 7 auf, an denen im vorliegenden Ausführungsbeispiel je eine Haltestruktur 8 mittels eines Bolzens 9 befestigt ist. Wie in Fig. 2 zu erkennen, trägt jede Haltestruktur 8 zwei Gleitsteine 5. Diese gleiten an einer Unterseite 10 der Schiene 2 bzw. an einer Seitenfläche der Schiene.

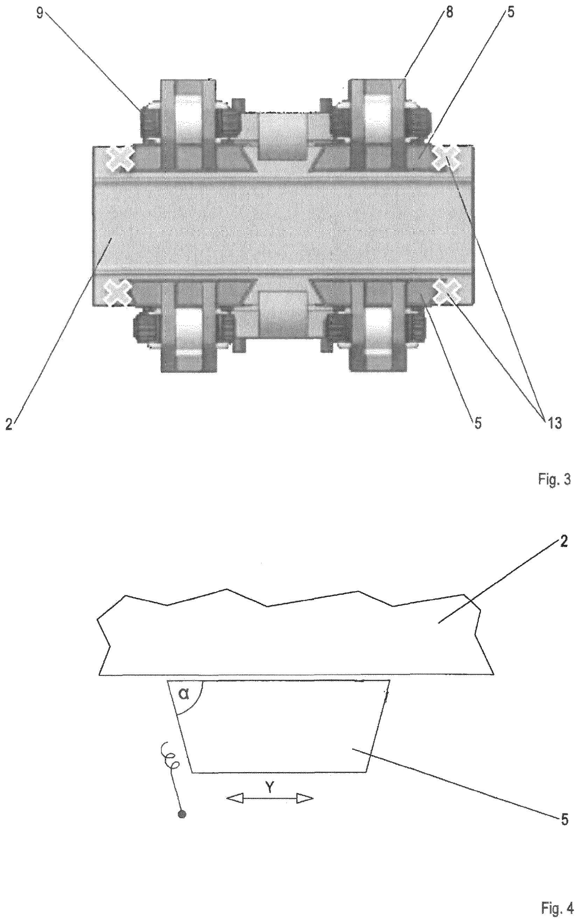

In Fig. 3 ist in der Unteransicht zu erkennen, wie durch zwei Paare Gleitsteine 5 der Schlitten 1 gegenüber seitlichen Bewegungen fest gelagert ist. In Fig. 3 ist des Weiteren eine bevorzugte Form der Gleitsteine 5 angedeutet, die in Fig. 4 ebenfalls in Unteransicht vergrößert dargestellt ist. Durch eine trapezförmige Ausgestaltung, wobei die Winkel α auf der der Schiene 2 zugewandten Seite spitz sind, werden Verschmutzungen im Betrieb von der Schiene 2 weggeschoben. Somit findet allein durch die Bewegung des Schlittens (in Fig. 4 durch den Doppelpfeil Y angedeutet) 1 eine automatische Reinigung der Schiene 2 statt.

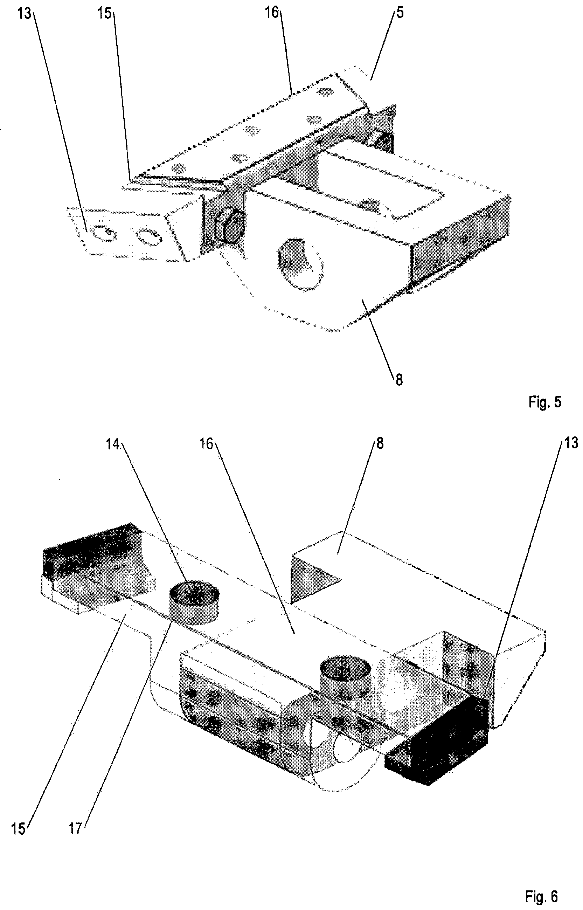

Der Reinigungseffekt wird optional noch durch zusätzliche Schmutzabweiser 13 verstärkt, die in Fig. 3 schematisch durch Kreuze angedeutet und in Fig. 5 im Detail dargestellt sind. Diese können wiederum trapezförmig ausgebildet sein, um den für die Gleitsteine 5 bereits beschriebenen Reinigungseffekt zu bewirken. Die Schmutzabweiser sind in diesem Beispiel Bürsten, können aber auch Gummielemente o.ä. sein.

In das Sintermetall der Gleitsteine ist in einer Variante des Ausführungsbeispiels ein Graphitstift 14 eingebracht, der 0,2 mm von Sintermetall bedeckt ist. Nach einem Verschleiß von 0,2 mm wird Graphit freigesetzt. Dieser färbt im Betrieb die Schiene 2 schwarz. Dadurch kann der Verschleiß von 0,2 mm leicht erkannt werden. Es lässt sich aber auch jede andere beliebige Verschleißgrenze dadurch einstellen, dass die Sintermetalldecke entsprechend dicker gewählt wird. Außer der Färbung hat der Graphitstift 14 verbesserte Notlaufeigenschaften zur Folge.

Die verbesserten Notlaufeigenschaften sind insbesondere dann vorteilhaft, wenn unter der (in diesem Fall 0,2 mm dicken) Schicht Sintermetall ein Material mit nicht so guten Gleiteigenschaften vorgesehen ist, das im Wesentlichen als Trägerkörper 15 für eine Gleitschicht 16 auf einer der Schiene 2 zugewandten Kontaktfläche 17 dient. Dadurch lassen sich die Materialkosten für die Gleitsteine und damit die gesamte Gleitlagerung reduzieren.

Die Erfindung betrifft ein Hochauftriebssystem für ein Flugzeug mit einer am Tragflügel des Flugzeugs angeordneten Hochauftriebsklappe, welche an einem mit dem Flügel gekoppelten Schlitten gelagert ist, wobei der Schlitten mittels einer Hochauftriebslagerung auf einer Schiene verschiebbar gelagert. Gemäß der Erfindung weist die Hochauftriebslagerung ein Gleitlager auf.

### Bezugszeichenliste

- 1: Schlitten
- 2: Schiene
- 3: Gelenk
- 4: Gleitlager
- 5: Gleitstein
- 6: Gleitschuh
- 7: Ende
- 8: Haltestruktur
- 9: Bolzen
- 10: Unterseite
- 13: Schmutzabweiser
- 14: Graphitstift
- 15: Trägerkörper
- 16: Gleitschicht
- 17: Kontaktfläche

## Patentansprüche

1. Hochauftriebssystem für einen Tragflügel eines Flugzeugs, mit einem Schlitten (1) und einer Hochauftriebsklappe, welche an dem Schlitten (1) gelagert ist, wobei der Schlitten (1) mittels einer Hochauftriebslagerung auf einer Schiene (2) entlang einer Bewegungsrichtung (Y) verschiebbar gelagert ist, wobei die Schiene dazu vorgesehen ist, an dem Tragflügel angebracht zu werden, wobei die Hochauftriebslagerung ein Gleitlager (4) mit trapezförmig ausgebildeten Gleitsteinen (5) aufweist, welche eine der Schiene (2) zugewandte trapezförmige Kontaktfläche (17) aufweisen, und wobei ein Winkel der Kontaktfläche (17), der sich zwischen einer sich in der Bewegungsrichtung (Y) erstreckenden Längskante der Kontaktfläche (17) und Seitenkanten der Kontaktfläche (17) ergibt, spitz ist.

2. Hochauftriebssystem nach Anspruch 1, **dadurch gekennzeichnet, dass** die Gleitsteine (5) als Material einen Werkstoff mit einem geringen Reibungskoeffizienten enthalten.

3. Hochauftriebssystem nach Anspruch 2, **dadurch gekennzeichnet, dass** die Gleitsteine (5) einen Trägerkörper (15) aufweisen, der mit dem Werkstoff als Gleitschicht (16) auf einer der Schiene (2) zugewandten Kontaktfläche (17) versehen ist.

4. Hochauftriebssystem nach Anspruch 2 oder 3, **dadurch gekennzeichnet, dass** der Werkstoff auf der Kontaktfläche (17) als Belag, Schicht, Beschichtung oder Buchse aufgebracht ist.

5. Hochauftriebssystem nach Anspruch 1, **dadurch gekennzeichnet, dass** die Gleitsteine (5) aus einem Werkstoff mit einem geringen Reibungskoeffizienten gebildet sind.

6. Hochauftriebssystem nach einem der Ansprüche 2 bis 5, **dadurch gekennzeichnet, dass** der Werkstoff mit geringen Reibungskoeffizienten ein Werkstoff aus der Gruppe bestehend aus Teflon, faserverstärktem Teflon, Graphit, Bleilegierung, Zinnlegierung und Sintermetall mit in den Poren eingelagertem Schmierstoff ist.

7. Hochauftriebssystem nach einem der vorhergehenden Ansprüche, **dadurch gekennzeichnet, dass** der Schlitten (1) einen Gleitschuh (6) mit auf gegenüberliegenden Seiten der Schiene (2) angeordneten Halteinrichtungen (8) aufweist, wobei die Halteinrichtungen (8) jeweils zwei Gleitsteine (5) derart tragen, dass einer der Gleitsteine (5) an einer Unterseite (10) der Schiene (2) und der andere Gleitstein (5) an einer Seitenfläche der Schiene (2) gleitet.

8. Hochauftriebssystem nach einem der vorhergehenden Ansprüche, **dadurch gekennzeichnet, dass** die Gleitsteine (5) Schmutzabweiser (13) aufweisen, die derart angeordnet und ausgebildet sind, dass Verschmutzungen auf der Schiene (2) im Betrieb abgestreift werden.

9. Hochauftriebssystem nach Anspruch 8, **dadurch gekennzeichnet, dass** der Schmutzabweiser (13) eine Bürste oder ein Gummielement enthält.

10. Hochauftriebssystem nach Anspruch 8 oder 9, **dadurch gekennzeichnet, dass** der Schmutzabweiser (13) trapezförmig ausgebildet ist, wobei ein Winkel auf der der Schiene (2) zugewandten Seite spitz ist.

11. Hochauftriebssystem nach einem der vorhergehenden Ansprüche, **dadurch gekennzeichnet, dass** ein Gleitstein (5) ein Abriebdetektionssystem aufweist.

12. Hochauftriebssystem nach Anspruch 11, **dadurch gekennzeichnet, dass** das Abriebdetektionssystem einen Graphitbereich (14) aufweist, der nach einem Abrieb des Gleitsteins (5) um eine vorgegebene Dicke freisetzbar ist.

## Claims

1. High lift system for a wing of an aircraft, comprising a carriage (1) and a high lift flap which is mounted on the carriage (1), wherein the carriage (1) is mounted by means of a high lift mounting on a rail (2) such that it can be displaced along a movement direction (Y), wherein the rail is provided to be fitted to the wing, wherein the high lift mounting has a sliding bearing (4) with trapezoidally shaped sliding blocks (5), which have a trapezoidal contact surface (17) facing the rail (2), and wherein an angle of the contact surface (17) which results between a longitudinal edge of the contact surface (17) extending in the movement direction (Y) and side edges of the contact surface (17) is acute.

2. High lift system according to Claim 1, **characterized in that** the sliding blocks (5) contain as material a material with a low coefficient of friction.

3. High lift system according to Claim 2, **characterized in that** the sliding blocks (5) have a supporting body (15), which is provided with the material as a sliding layer (16) on a contact surface (17) facing the rail (2).

4. High lift system according to Claim 2 or 3, **characterized in that** the material is applied to the contact surface (17) as a covering, layer, coating or bush.

5. High lift system according to Claim 1, **characterized in that** the sliding blocks (5) are formed from a material with a low coefficient of friction.

6. High lift system according to one of Claims 2 to 5, **characterized in that** the material with a low coefficient of friction is a material from the group comprising Teflon, fibre-reinforced Teflon, graphite, lead alloy, tin alloy and sintered metal with lubricant embedded in the pores.

7. High lift system according to one of the preceding claims, **characterized in that** the carriage (1) has a sliding shoe (6) with holding devices (8) arranged on opposite sides of the rail (2), wherein the holding devices (8) each carry two sliding blocks (5) in such a way that one of the sliding blocks (5) slides on an underside (10) of the rail (2), and the other sliding block (5) slides on a side surface of the rail (2).

8. High lift system according to one of the preceding claims, **characterized in that** the sliding blocks (5) have dirt deflectors (13), which are arranged in formed in such a way that contaminants on the rail (2) are stripped off in operation.

9. High lift system according to Claim 8, **characterized in that** the dirt deflector (13) contains a brush or a rubber element.

10. High lift system according to Claim 8 or 9, **characterized in that** the dirt deflector (13) is trapezoidal, wherein an angle on the side facing the rail (2) is acute.

11. High lift system according to one of the preceding claims, **characterized in that** a sliding block (5) has an abrasion detection system.

12. High lift system according to Claim 11, **characterized in that** the abrasion detection system has a graphite region (14) which can be released following abrasion of the sliding block (5) by a predefined thickness.

## Revendications

1. Système d'hypersustentation pour une aile d'un avion, avec un chariot (1) et un clapet d'hypersustentation, qui est monté sur le chariot (1), dans lequel le chariot (1) est monté de façon déplaçable sur un rail (2) le long d'une direction de mouvement (Y) au moyen d'un support d'hypersustentation, dans lequel le rail est prévu pour être installé sur l'aile, dans lequel le support d'hypersustentation présente un appui lisse (4) avec des coulisseaux de forme trapézoïdale (5), qui présentent une face de contact de forme trapézoïdale (17) tournée vers le rail (2), et dans lequel un angle de la face de contact (17), qui se forme entre un côté longitudinal de la face de contact (17) s'étendant dans la direction de mouvement (Y) et des côtés latéraux de la face de contact (17), est un angle aigu.

2. Système d'hypersustentation selon la revendication 1, **caractérisé en ce que** les coulisseaux (5) contiennent en tant que matière un matériau avec un faible coefficient de frottement.

3. Système d'hypersustentation selon la revendication 2, **caractérisé en ce que** les coulisseaux (5) présentent un corps de support (15), qui est muni du matériau comme couche de glissement (16) sur une face de contact (17) tournée vers le rail (2).

4. Système d'hypersustentation selon une revendication 2 ou 3, **caractérisé en ce que** le matériau est déposé sur la face de contact (17) sous la forme d'une garniture, d'une couche, d'un revêtement ou d'un coussinet.

5. Système d'hypersustentation selon la revendication 1, **caractérisé en ce que** les coulisseaux (5) sont formés en un matériau avec un faible coefficient de frottement.

6. Système d'hypersustentation selon l'une quelconque des revendications 2 à 5, **caractérisé en ce que** le matériau avec un faible coefficient de frottement est un matériau du groupe composé du Téflon, du Téflon renforcé par des fibres, du graphite, d'un alliage de plomb, d'un alliage d'étain et d'un métal fritté avec un lubrifiant inséré dans les pores.

7. Système d'hypersustentation selon l'une quelconque des revendications précédentes, **caractérisé en ce que** le chariot (1) présente un patin (6) avec des dispositifs de maintien (8) disposés sur des côtés opposés du rail (2), dans lequel les dispositifs de maintien (8) portent chacun deux coulisseaux (5), de telle manière qu'un des coulisseaux (5) glisse sur un côté inférieur (10) du rail (2) et que l'autre coulisseau (5) glisse sur une face latérale du rail (2).

8. Système d'hypersustentation selon l'une quelconque des revendications précédentes, **caractérisé en ce que** les coulisseaux (5) présentent des pare-boue (13), qui sont disposés et configurés de telle manière que des dépôts de crasses sur le rail (2) pendant le fonctionnement soient éliminés par raclage.

9. Système d'hypersustentation selon la revendication 8, **caractérisé en ce que** le pare-boue (13) contient une brosse ou un élément en caoutchouc.

10. Système d'hypersustentation selon une revendication 8 ou 9, **caractérisé en ce que** le pare-boue (13) est réalisé sous forme trapézoïdale, dans lequel un angle sur le côté tourné vers le rail (2) est un angle aigu.

11. Système d'hypersustentation selon l'une quelconque des revendications précédentes, **caractérisé en ce qu'**un coulisseau (5) présente un système de détection d'usure.

12. Système d'hypersustentation selon la revendication 11, **caractérisé en ce que** le système de détection d'usure présente une zone de graphite (14), qui peut être exposée librement après une usure du coulisseau (5) sur une épaisseur prédéterminée.
